# EUROPEAN PATENT SPECIFICATION

(11) **EP 4 713 154 B1**
(45) Date of publication and mention of the grant of the patent: **09.09.2026**
(21) Application number: 25728233.5
(22) Date of filing: 21.05.2025
(51) Int. Cl.: B09B 1/00, E02D 31/00, E02B 11/00

(54) **CONTAINMENT STRUCTURE FOR LANDFILLS**
EINDÄMMUNGSSTRUKTUR FÜR DEPONIEN
STRUCTURE DE CONFINEMENT POUR DÉCHARGES

(30) Priority: 10.06.2024 IT 202400013186
(43) Date of publication of application: 25.03.2026
(73) Proprietor: Frisoli S.r.l., 71122 Foggia (IT)
(72) Inventor: FRISOLI, Ciro, 71122 Foggia (IT)
(74) Representative: Studio Torta S.p.A.
(86) International application number: PCT/IB2025/055271
(87) International publication number: WO 2025/257641

(56) References cited:
- EP-A1- 1 661 635
- ES-T3- 2 265 136
- US-A- 5 141 362
- US-B2- 7 309 188

## Description

### Cross-Reference to Related Applications

This patent application claims priority from Italian patent application no. 102024000013186 filed on June 10, 2024.

### Technical Field

The present invention relates to a containment structure for landfills comprising a covering, the technical features of which allow a solidity to be guaranteed such as to be able safely to support installations of different kinds, such as, for example, greenhouses or photovoltaic modules and simultaneously to perform correct final closure of the landfill.

The present invention is in the technical field of clean-up of full landfills of solid urban waste and/or special waste.

### Prior Art

Currently, once the waste has filled the purpose-built tank, it is customary to continue using the waste deposit by constructing walls that can contain the waste that begins to accumulate above the surface of the landfill.

The foundation of these walls is generally made of embankments formed of granular and/or earthy materials and has a width of around 15m, which varies according to the altimetric dimensions of the landfill itself.

Furthermore, for full landfills there is a need to obtain a covering in order to isolate the landfill itself.

Currently, the covering of landfills is substantially performed by depositing earth on them. As is known to a person skilled in the art, the earth that forms the covering is subject to the action of various external forces (wind erosion or rainwater erosion) that result in transformation of the morphology over time, and also to a series of settlements due to the anaerobic biological degradation that continues over time in the body of the landfill, even after it is full.

There has been a need for some time to redevelop the zone in which the landfill has been built.

However, the aforesaid features of the covering for landfills make it practically impossible to plan for the installation on them of structures that need a stable base, such as, for example, photovoltaic modules or greenhouses.

In fact, the current redevelopment solutions are limited to covering the final covering, after closure of the landfills, with crops. Such a solution, however, must reckon with the presence of the waste in the body of the landfill, with its toxic effects, which obviously prevents the growing of fruit and vegetable crops.

Usually, in order to be certain that installations can be safely built on coverings for landfills, it is necessary to wait around ten years from closure of the landfill itself. In fact, there should be reasonable certainty that the biological degradation responsible for settlement has concluded in this period.

As will be immediately clear, a ten-year wait can be too limiting for the social needs that revolve around landfills.

It must be considered that such a problem will be felt increasingly if it is considered that the production of waste and, therefore, the number of landfills, is continually rising, and that there are increasingly fewer areas available for building new sites.

There was therefore a need to have a solution that would allow the performance, in the brief period after closure of the landfill, of energy requalification and/or architectural redevelopment of the site of the landfill itself, even with installations that, by their nature, require a stable foundation.

US7309188B2 describes a synthetic drainable base course composite element suitable for providing drainage when positioned within a landfill. The base course element comprises a void-maintaining geocomposite including a geocomposite core element and at least one fluid-transmissible layer attached adjacent an upper surface.

EP1661635A1 describes a refuse dump containment structure (1; 19) having a foundation layer (2) immersed in refuse and/or the ground, and a number of containment layers (8; 20) stacked on top of the foundation layer; each of the containment layers is covered for support by a geomesh (9), and has an outer portion (10; 21) of vegetable earth or clay, and an inner portion (11) of compacted refuse; and the outer portion (10; 21) has a water drainage sector (12; 22) and a biogas drainage sector (15; 23), and is inclined at an angle of 75° or less.

US5141362A describes a process for constructing a self-sealing layer for landfills and waste dumps that use a base layer, cap layer, or liner to seal the area from water percolation through cracks or holes. A layer of soil is provided having specified characteristics which will become flowable under the effects of water moving through the layer. The soil is moved into the crack or hole by the water and accumulates until the breach is sealed. Geotextiles, otherwise known as textile mats, may be used inside the layer to reinforce the layer and enhance the self sealing effect of the flowable soil layer. Water glass and an appropriate gelling agent may be used in an embedding zone on either side of the mat to enhance and adhesion between the mat and the material in the cap, base, or liner.

### Description of the Invention

The object of the present invention is a covering structure for a landfill, comprising an internal multilayer and an external multilayer; said internal multilayer comprising in succession, from bottom to top, a lower regularization layer in sand, an intermediate layer of clay and an upper mineral layer made of mixed grain size quarry between 2 and 6 cm; said covering structure comprising at least one drainage sector made of gravel with a grain size between 2 and 5 cm and inserted in a passing form inside the upper mineral layer and a plurality of reinforcing geogrids extending both along said internal multilayer and along said external multilayer and anchored to said drainage sector.

Preferably, said drainage sector extends perimeterally close to said external multilayer.

Preferably, said intermediate layer of clay is arranged between two draining mats.

Preferably, the draining mat arranged above said intermediate layer of clay is a geocomposite for the drainage of rainwater and the draining mat arranged under said intermediate layer of clay is a geocomposite for biogas drainage.

Preferably, said covering structure includes at least one drainage pipe housed inside said drainage sector.

Preferably, said external multilayer is arranged obliquely to laterally contain said internal multilayer and includes an internal oblique layer made of clay and an external oblique layer made in topsoil.

Preferably, said internal oblique layer is arranged between two draining mats.

Preferably, said recomposite internal oblique layer and said external oblique layer are surrounded and crossed by a plurality of electro-welded meshes to which tie rods are applied.

Preferably, each of said tie rods is anchored to two electro-welded meshes.

Preferably, said covering structure comprises a plurality of geogrids laid on said electro-welded meshes.

### Brief Description of the Drawings

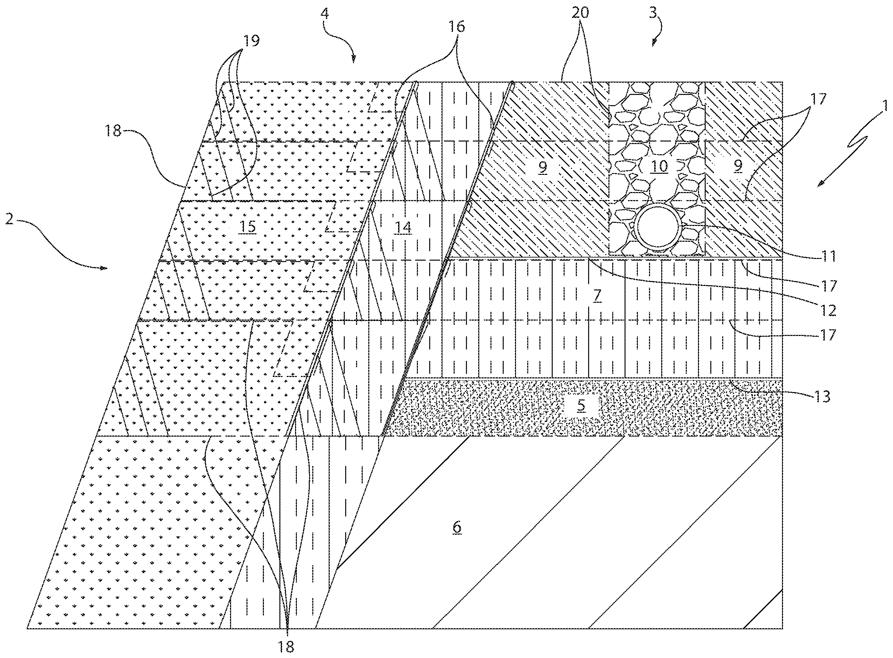

For a better understanding of the present invention, an illustrative and non-limiting embodiment is described below, with the assistance of the appended drawing, which shows a transverse section of the covering structure for landfills according to the present invention.

### Detailed Description of the Invention

In the figure, the number 1 denotes, in its entirety, a containment structure for landfills comprising a covering structure 2 according to the present invention.

The covering structure 2 comprises an internal multilayer 3 and an external multilayer 4.

The internal multilayer 3 comprises, in turn, from bottom to top, a regularization layer 5 in sand, with a minimum thickness of 0.30 m and arranged above the existing waste 6, an interception layer in clay 7 with a minimum thickness of 0.50 m and an upper mineral layer 9 with a minimum thickness of 0.90.

The upper mineral layer 9 is made of mixed grain size quarry between 2 and 6 cm. A drainage sector 10 made of gravel with a grain size between 2 and 5 cm is inserted in the upper mineral layer 9.

The drainage sector 10 has the function of collecting rainwater and preventing it from percolating into the waste. For this reason, in the drainage sector 10 a corrugated and slotted drainage pipe 11 is housed that serves to channel the water collected in order to then convey it into a discharge system. The drainage sector 10 extends perimeterally close to the external multilayer 4.

The internal multilayer 3 comprises a first draining mat 12 arranged above said interception layer 7 and a second draining mat 13 arranged under said interception layer 7. The first draining mat 12 is a geocomposite for the drainage of rainwater, while the second draining mat 13 is a geocomposite for drainage of the biogases that develop from the underlying waste.

The external multilayer 4 is formed of an internal oblique layer 14 made of clay, with a minimum thickness of 0.50 m, and an external oblique layer 15 made of topsoil, with a minimum thickness of 1 m. The internal layer 14 is arranged between two draining mats 16 made of a geocomposite.

In particular, the internal layer 14 and the external layer 15 are arranged obliquely with an inclination of 70° with respect to the horizontal plane.

The covering structure 2 comprises a plurality of reinforcing geogrids 17 that extend horizontally and at different heights crossing the internal multilayer 3 and the external multilayer 4.

The reinforcing geogrids 17 that cross the upper mineral layer 9 are anchored to the drainage layer 10 made of gravel.

The external multilayer 4 comprises electro-welded meshes 18, bent with an angle of 70° and arranged both in the external layer 15 and in the internal layer 14, both horizontally and along the oblique side walls of the external layer 15 and internal layer 14. The electro-welded meshes 18 of the external layer 15 are 15x15 cm² netted meshes with a diameter of 8 mm, whereas the electro-welded meshes 18 of the internal layer 14 are 20x20 cm² netted meshes with a diameter of 6 **mm.** Steel tie rods 19 with a diameter of 8 mm and a bar length of around 27 m are applied to the electro-welded meshes 18 arranged along the oblique walls of the external layer 15 every 3 m of linear length of the structure.

In particular, part of the reinforcing geogrids 17 are arranged covering the electro-welded meshes 18.

Lastly, the structure comprises layers of non-woven fabric 20 arranged covering the outer surface of the upper mineral layer 9 and the side walls of the drainage sector 10 with a protection and anti-erosion function.

If the landfill extends in elevation in its central part, the covering structure will comprise a portion of slope of the internal multilayer, in which, in contrast with what is described above, the presence of the drainage sector will not be envisaged.

In this case, the presence of the opportunely anchored geogrids provides a structural continuity such as to allow the formation/support of slopes over 35° in inclination. It should be considered that the gradient of 35° is the angle of resistance of compact sandy soil.

The present invention guarantees the prevention of widespread subsidence caused by settlement due to biological degradation that occurs in landfill bodies after they are full. In particular, the covering structure according to the present invention has the dual function of preventing the subsidence transmitted to the surface of the landfill by the biological degradation and of isolating it by creating a surface covering that complies with Legislative Decree no. 36/2003 (updated by Legislative Decree **no.** 121/2020) for closure of full landfills. In particular, the aforesaid dual function will allow a surface covering to be created that complies with the landfill clean-up measures and also the subsequent redevelopment thereof, allowing the installation of supports/ballasting for various structures, such **as,** for example, clean energy production systems, like photovoltaic systems, without the risk of damage to them being caused by settlement phenomena.

Lastly, if the internal multilayer of the landfill were to extend in elevation, the structure of the present invention, thanks to its layers of geogrids, designed to provide structural continuity, allows the formation/support of inclined slopes, with any angle, duly anchored.

## Claims

1. Covering structure (2) of a landfill (1), comprising an internal multilayer (3) and an external multilayer (4); said internal multilayer (3) comprising in succession, from bottom to top, a lower regularization layer (5) in sand, an intermediate layer (7) of clay and an upper mineral layer (9) made of mixed grain size quarry between 2 and 6 cm; said covering structure comprising at least one drainage sector (10) made of gravel with a grain size between 2 and 5 cm and inserted in a passing form inside the upper mineral layer (9) and a plurality of reinforcing geogrids (17) extending both along said internal multilayer and along said external multilayer and anchored to said drainage sector (10).

2. Covering structure according to claim 1, **characterized in that** said drainage sector (10) extends perimeterally close to said external multilayer (4).

3. Covering structure according to claim 1 or 2, **characterized in that** said intermediate layer (7) of clay is arranged between two draining mats (12, 13).

4. Covering structure according to claim 3, **characterized in that** the draining mat (12) arranged above said intermediate layer of clay is a geocomposite for the drainage of rainwater and the draining mat (13) arranged under said intermediate layer of clay is a geocomposite for biogas drainage.

5. Covering structure according to one of the previous claims, **characterized in that** it includes at least one drainage pipe (11) housed inside said drainage sector (10).

6. Covering structure according to one of the previous claims, **characterized in that** said external multilayer (4) is arranged obliquely to laterally contain said internal multilayer (3) and includes an internal oblique layer (14) made of clay and an external oblique layer (15) made in topsoil.

7. Covering structure according to claim 6, **characterized in that** said oblique internal layer (14) is arranged between two draining mats (16).

8. Covering structure according to claim 6 or 7, **characterized in that** said internal oblique layer (14) and said external oblique layer (15) are surrounded and crossed by a plurality of electro-welded meshes (18) to which tie rods are applied (19).

9. Covering structure according to claim 8, **characterized by** the fact that each of the said tie rods (19) is anchored to two electro-welded meshes (18).

10. Covering structure according to claim 8 or 9, **characterized by** the fact of comprising a plurality of geogrids (17) laid on said electro-welded meshes (18).

11. Covering structure according to claim 1, **characterized by** the fact that said internal multilayer (3) includes a portion of slope.

## Patentansprüche

1. Abdeckstruktur (2) einer Deponie (1), umfassend eine innere Mehrschichtanordnung (3) und eine äußere Mehrschichtanordnung (4), wobei die innere Mehrschichtanordnung (3) von unten nach oben aufeinanderfolgend eine untere Ausgleichsschicht (5) aus Sand, eine Zwischenschicht (7) aus Ton und eine obere mineralische Schicht (9), die aus Steinbruchmaterial mit gemischter Korngröße zwischen 2 und 6 cm besteht, umfasst, wobei die Abdeckstruktur mindestens einen Drainagesektor (10), der aus Kies mit einer Korngröße zwischen 2 und 5 cm besteht und durchgehend innerhalb der oberen mineralischen Schicht (9) eingesetzt ist, und eine Vielzahl von verstärkenden Geogittern (17), die sich sowohl entlang der inneren Mehrschichtanordnung als auch entlang der äußeren Mehrschichtanordnung erstrecken und an dem Drainagesektor (10) verankert sind, umfasst.

2. Abdeckstruktur nach Anspruch 1, **dadurch gekennzeichnet, dass** sich der Drainagesektor (10) umfangseitig nahe an der äußeren Mehrschichtanordnung (4) erstreckt.

3. Abdeckstruktur nach Anspruch 1 oder 2, **dadurch gekennzeichnet, dass** die Zwischenschicht (7) aus Ton zwischen zwei Drainagematten (12, 13) angeordnet ist.

4. Abdeckstruktur nach Anspruch 3, **dadurch gekennzeichnet, dass** die über der Zwischenschicht aus Ton angeordnete Drainagematte (12) ein Geokomposit zur Regenwasserdrainage ist und die unter der Zwischenschicht aus Ton angeordnete Drainagematte (13) ein Geokomposit zur Biogasdrainage ist.

5. Abdeckstruktur nach einem der vorhergehenden Ansprüche, **dadurch gekennzeichnet, dass** sie mindestens ein Drainagerohr (11), das innerhalb des Drainagesektors (10) untergebracht ist, beinhaltet.

6. Abdeckstruktur nach einem der vorhergehenden Ansprüche, **dadurch gekennzeichnet, dass** die äußere Mehrschichtanordnung (4) schräg angeordnet ist, um die innere Mehrschichtanordnung (3) seitlich einzufassen, und eine innere schräge Schicht (14), die aus Ton besteht, und eine äußere schräge Schicht (15), die aus Mutterboden besteht, beinhaltet.

7. Abdeckstruktur nach Anspruch 6, **dadurch gekennzeichnet, dass** die schräge innere Schicht (14) zwischen zwei Drainagematten (16) angeordnet ist.

8. Abdeckstruktur nach Anspruch 6 oder 7, **dadurch gekennzeichnet, dass** die innere schräge Schicht (14) und die äußere schräge Schicht (15) von einer Vielzahl von elektrogeschweißten Netzen (18), an denen Zugstangen (19) angebracht sind, umgeben ist und durchquert wird.

9. Abdeckstruktur nach Anspruch 8, **dadurch gekennzeichnet, dass** jede der Zugstangen (19) an zwei elektrogeschweißten Netzen (18) verankert ist.

10. Abdeckstruktur nach Anspruch 8 oder 9, **dadurch gekennzeichnet, dass** sie eine Vielzahl von Geogittern (17), die auf den elektrogeschweißten Netzen (18) verlegt sind, umfasst.

11. Abdeckstruktur nach Anspruch 1, **dadurch gekennzeichnet, dass** die innere Mehrschichtanordnung (3) einen Böschungsabschnitt beinhaltet.

## Revendications

1. Structure de recouvrement (2) d'une décharge (1), comprenant une structure multicouches interne (3) et une structure multicouches externe (4) ; ladite structure multicouches interne (3) comprenant successivement, de bas en haut, une couche de régularisation inférieure (5) en sable, une couche intermédiaire (7) d'argile et une couche minérale supérieure (9) constituée de matériaux de carrière à granulométrie mixte comprise entre 2 et 6 cm ; ladite structure de recouvrement comprenant au moins un secteur de drainage (10) constitué de gravier avec une granulométrie comprise entre 2 et 5 cm et inséré de manière traversante à l'intérieur de la couche minérale supérieure (9) et une pluralité de géogrilles de renforcement (17) s'étendant à la fois le long de ladite structure multicouches interne et le long de ladite structure multicouches externe et ancrées audit secteur de drainage (10).

2. Structure de recouvrement selon la revendication 1, **caractérisée en ce que** ledit secteur de drainage (10) s'étend de manière périphérique, à proximité immédiate de ladite couche multicouches externe (4).

3. Structure de recouvrement selon la revendication 1 ou 2, **caractérisée en ce que** ladite couche intermédiaire (7) d'argile est disposée entre deux tapis de drainage (12, 13).

4. Structure de recouvrement selon la revendication 3, **caractérisée en ce que** le tapis de drainage (12) disposé au-dessus de ladite couche intermédiaire d'argile est un géocomposite destiné au drainage des eaux de pluie et **en ce que** le tapis de drainage (13) disposé sous ladite couche intermédiaire d'argile est un géocomposite destiné au drainage du biogaz.

5. Structure de recouvrement selon l'une des revendications précédentes, **caractérisée en ce qu'**elle comprend au moins un tuyau de drainage (11) logé à l'intérieur dudit secteur de drainage (10).

6. Structure de recouvrement selon l'une des revendications précédentes, **caractérisée en ce que** ladite couche multicouches externe (4) est disposée obliquement de manière à contenir latéralement ladite couche multicouches interne (3) et comprend une couche oblique interne (14) en argile et une couche oblique externe (15) en terre végétale.

7. Structure de recouvrement selon la revendication 6, **caractérisée en ce que** ladite couche interne oblique (14) est disposée entre deux tapis de drainage (16).

8. Structure de recouvrement selon la revendication 6 ou 7, **caractérisée en ce que** ladite couche oblique interne (14) et ladite couche oblique externe (15) sont entourées et traversées par une pluralité de treillis électrosoudés (18) auxquels sont fixés des tirants (19).

9. Structure de recouvrement selon la revendication 8, **caractérisée en ce que** chacun desdites tirants (19) est ancré à deux treillis électrosoudés (18).

10. Structure de recouvrement selon la revendication 8 ou 9, **caractérisée en ce qu'**elle comprend une pluralité de géogrilles (17) posées sur lesdits treillis électrosoudés (18).

11. Structure de recouvrement selon la revendication 1, **caractérisée en ce que** ladite couche interne multicouches (3) comporte une partie en pente.
